# EUROPÄISCHE PATENTSCHRIFT

(11) **EP 1 650 063 B1**
(45) Veröffentlichungstag und Bekanntmachung des Hinweises auf die Patenterteilung: **07.04.2010**
(21) Anmeldenummer: 05022867.5
(22) Anmeldetag: 20.10.2005
(51) Int. Cl.: B60H 1/00

(54) **Vorrichtung zur Kühlung einer Wärmequelle eines Kraftfahrzeugs**
Apparatus for cooling a heat source of a motor vehicle
Dispositif pour le refroidissement d'une source de chaleur d'un véhicule automobile

(30) Priorität: 21.10.2004 DE 102004051534
(43) Veröffentlichungstag der Anmeldung: 26.04.2006
(73) Patentinhaber: Behr GmbH & Co. KG, 70469 Stuttgart (DE)
(72) Erfinder: Heinle, Dieter, Dipl.-Ing., 73655 Plüdershausen (DE); Klingler, Dietrich, Dipl.-Ing., 73540 Heubach (DE); Riegel, Harald, Dr.-Ing. Dr., 70499 Stuttgart (DE); Schubert, Sonja, 69168 Wiesloch (DE)
(74) Vertreter: Grauel, Andreas

(56) Entgegenhaltungen:
- EP-B1- 0 897 348
- AU-A- 3 152 771
- FR-A1- 2 496 016
- GB-A- 2 343 161
- GB-A- 2 343 164
- JP-A- 62 295 717

## Beschreibung

Die Erfindung betrifft eine Vorrichtung zur Kühlung einer Wärmequelle eines Kraftfahrzeugs nach dem Oberbegriff des Anspruchs 1.

Der zunehmende Einsatz von elektrischen und elektronischen Bauteilen im Innenraum von Kraftfahrzeugen führt zu thermischen Problemen. Insbesondere die Raumbereiche unter oder hinter dem Armaturenbrett werden zunehmend mit elektronischen Komponenten gefüllt, wobei zunehmende Abwärme und verringerter Bauraum zur Luftzirkulation sich gegenseitig ergänzen. Hieraus ergibt sich die Notwendigkeit einer verbesserten Kühlung solcher Wärmequellen.

EP 0 897 348 B1 beschreibt eine Vorrichtung zur Kühlung von elektrischen Komponenten im Bereich eines Armaturenbretts, wobei Luft aus einem Hauptkanal einer Lüftungsvorrichtung durch einen Bypasskanal gedrückt werden kann. Die elektronischen Komponenten stehen zum Zwecke der Kühlung in dem Bypasskanal in thermischem Kontakt mit der abgezweigten Luft.

FR 8 026 446 beschreibt eine Vorrichtung zur Kühlung von elektrischen Komponenten nach dem Oberbegriff des Anspruchs 1.

Es ist die Aufgabe der Erfindung, eine Vorrichtung anzugeben, mit der eine Wärmequelle, insbesondere im Bereich eines Fahrgastraums, auf einfache Weise kühlbar ist.

Diese Aufgabe wird für eine eingangs genannte Vorrichtung erfindungsgemäß mit den kennzeichnenden Merkmalen des Anspruchs 1 gelöst.

Vorteilhaft wird die Kühlluft im Saugbetrieb von der Wärmequelle weggeführt, wodurch eine geräuscharme Luftführung ermöglicht ist. Zudem besteht ein weiterer Vorteil darin, daß von der Wärmequelle abgegebene Ausdünstungen auf einfache Weise an einem Eintritt in den Fahrgastbereich gehindert werden. Bei einer Förderung der Luft im Druckbetrieb, wie sie aus dem Stand der Technik bekannt ist, würden diese im allgemeinen schädlichen oder unangenehm riechenden Gase oder zumindest diese untemperierte, insbesondere erwärmte Luft zum Teil in den Fahrgastraum eintreten oder müßten mit hohem Aufwand an Abdichtung daran gehindert werden. Ein weiterer Vorteil des Saugbetriebs liegt darin, daß eine geringere Gefahr der Abscheidung von Kondenswasser im Bereich des elektrischen Verbrauchers besteht. Hierzu kann es insbesondere vorteilhaft sein, daß die Luft zur Kühlung der Wärmequelle zumindest teilweise aus dem Fahrgastbereich stammt, da diese Luft im allgemeinen bereits kurz nach Antritt der Fahrt konditioniert ist.

Kostengünstig und auf einfache Weise kann dabei eine Saugleitung zum Absaugen der Luft von der Wärmequelle vorgesehen sein, wobei eine Einmündung der Saugleitung zum Absaugen der Luft von der Wärmequelle in einem Bereich des Gebläses in dem ein geringer statischer Druck herrscht angeordnet ist. Vorteilhafterweise ist die Einmündung der Saugleitung im Bereich einer Stirnebene des Rotors des Gebläses, benachbart zu oder unmittelbar an einem zentralen Hauptluftzutritt des Gebläses und/oder in einem Umfangsbereich des Gehäuses des Gebläses angeordnet. Bevorzugt ist die Einmündung der Saugleitung in einem Teilungsbereich bzw. Trennbereich oder in der Trennebene des Gehäuses des Gebläses, beispielsweise bei einem aus mindestens zwei Gehäusehälften bestehenden Gebläsegehäuse angeordnet.

Vorteilhaft ist die Wärmequelle im Bereich eines Armaturen- oder Instrumentenbrettsbretts bzw. des Cockpits des Kraftfahrzeugs angeordnet, wobei im Folgenden der Einfachheit halber allgemein auf ein Armaturenbrett Bezug genommen wird. Mittels dieser Anordnung ist ein besonders einfacher Anschluß eines saugend betriebenen Gebläses ermöglicht. Zudem kann je nach Anforderungen auf einen separat ausgebildeten Strömungskanal weitgehend verzichtet werden. Vielmehr kann der von dem Armaturenbrett umschlossene Raum an sich als Strömungskanal wirken, so daß das Armaturenbrett selbst als Strömungskanal im Sinne der Erfindung fungieren kann. Zwischenlösungen zur lokal verbesserten Luftführung können kanalartige Gehäuse unter dem Armaturenbrett sein, die nur zum Teil luftdicht sind und die Führung der abgesaugten Luft unterstützen. Auch solche nicht luftdichten Kanäle sind geeignete Strömungskanäle im Sinne der Erfindung, die natürlich das Vorsehen eines luftdichten Strömungskanals nicht ausschließt.

Besonders vorteilhaft ist die abgesaugte Luft einer Klimaanlage des Kraftfahrzeugs zuführbar. Insbesondere vorteilhaft durchläuft die Luft nach ihrer Zuführung zu der Klimaanlage eine Konditionierung, insbesondere eine Kühlung und/oder eine Filterung. Hierdurch ist auf einfache Weise erreichbar, daß Schadstoffe und/oder Geruchsstoffe aus der abgesaugten Luft entfernt werden, bevor die Luft dem Fahrgastbereich des Fahrzeugs zugeführt wird.

In Verbindung mit der Zuführung der Luft zu der Klimaanlage ist das Gebläse zum Absaugen der Luft vorteilhaft ein Hauptgebläse der Klimaanlage.

Weiterhin vorteilhaft kann zusätzlich zu der Verbindung mit dem Hauptgebläse der Klimaanlage ein Zusatzgebläse zur Beförderung der Luft vorgesehen sein. Insbesondere bei hoher thermischer Last und/oder ungünstigen Bedingungen und/oder ausgeschalteter Klimaanlage kann das Zusatzgebläse eine ergänzende oder auch alleinige Kühlung der Wärmequelle gewährleisten. Vorteilhaft ist das Zusatzgebläse zumindest im Regelfall ausgeschaltet, so daß keine zusätzliche Geräuschbelästigung besteht.

In einer vorteilhaften Ausbildung einer erfindungsgemäßen Vorrichtung ist eine Kontrollvorrichtung zur Kontrolle der Temperatur der Wärmequelle vorgesehen, mittels derer das Gebläse ansteuerbar ist. Die Ansteuerung kann sich dabei auch auf das zuvor erwähnte optionale Zusatzgebläse erstrecken. So kann die Kontrollvorrichtung zum Beispiel dazu dienen, das Zusatzgebläse bei drohender Überhitzung der Wärmequelle einzuschalten. Bei einer solchen Anordnung kann es auch möglich sein, daß das Zusatzgebläse ein im Druckbetrieb arbeitendes Gebläse ist, das gegebenenfalls eine besonders hohe Kühlleistung aufweist. Insofern eine Zuschaltung nur unter seltenen Extrembedingungen erfolgt, kann es dabei auch vorgesehen sein, daß die Abluft nach der Kühlung bei aktiviertem Zusatzgebläse in den Fahrgastraum eintritt. Die Kontrolle der Temperatur der Wärmequelle kann entweder unmittelbar durch einen Temperatursensor oder einen Bimetallstreifen erfolgen oder mittelbar durch Berechnung aus Parametern wie elektrische Last, Innenraumtemperatur und Regelstellung des Gebläses. Eine erforderliche Zuschaltung eines Zusatzgebläses oder eine Hochregelung des (gegebenenfalls einzigen) Gebläses kann unmittelbar durch eine Steuerungselektronik der Fahrzeugklimaanlage erfolgen, so daß die Kontrollvorrichtung Bestandteil der Klimaanlagensteuerung ist und die erfindungsgemäße Vorrichtung insgesamt nur wenige zusätzliche Komponenten erfordert.

Weitere Vorteile und Merkmale einer erfindungsgemäßen Vorrichtung ergeben sich aus dem nachfolgend geschilderten Ausführungsbeispiel sowie aus den abhängigen Ansprüchen.

Nachfolgend wird ein bevorzugtes Ausführungsbeispiel einer erfindungsgemäßen Vorrichtung beschrieben und anhand der anliegenden Zeichnungen näher erläutert.
- Fig. 1: zeigt eine schematische Ansicht einer erfindungsgemäßen Vorrichtung in Kombination mit einer Klimaanlage des Kraftfahrzeugs.
- Fig. 2: zeigt eine räumliche Ansicht eines radialen Gebläses mit einer daran angeordneten Saugleitung.
- Fig. 3: zeigt eine Schnittansicht durch das Gebläse aus Fig. 2 entlang der Linie A-A.
- Fig. 4: zeigt eine räumliche Ansicht einer abgewandelten Ausführungsform eines radialen Gebläses mit einer daran angeordneten Saugleitung.
- Fig. 5: zeigt eine räumliche Ansicht eines Klimagerätes mit Gebläse und an dem Gebläse angeordneter Saugleitung.
- Fig. 6: zeigt eine räumliche Ansicht eines Radialgebläses einer Klimaanlage mit sichtbar dargestelltem Gebläserotor, wobei ein für die Anordnung einer Saugleitung geeigneter Bereich grafisch hervorgehoben ist.

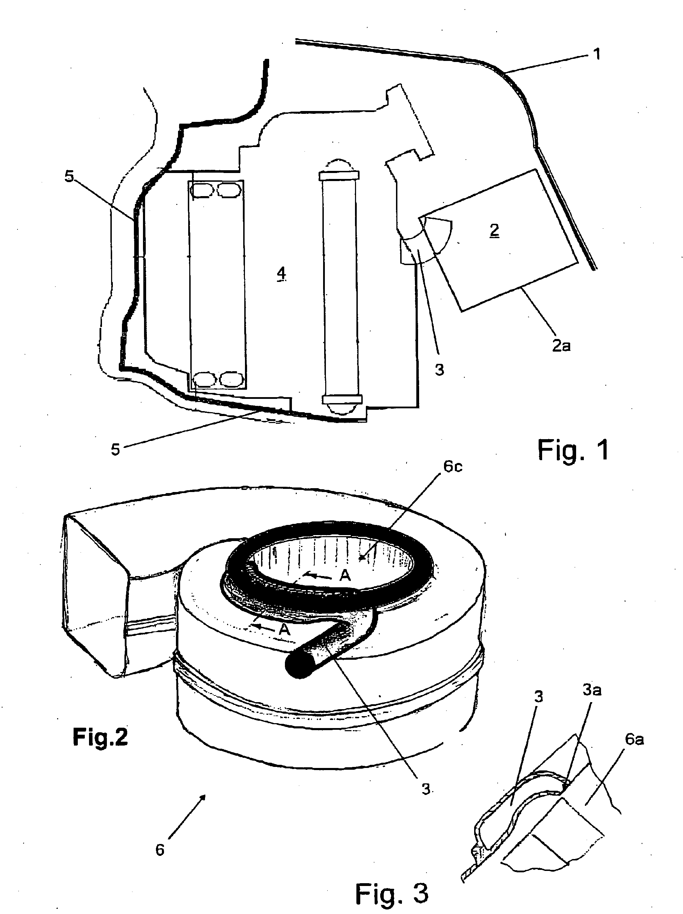

Die Ausführung einer erfindungsgemäßen Vorrichtung gemäß Fig. 1 umfaßt eine unterhalb eines Armaturenbretts 1 angeordneten elektrischen Verbraucher 2. Dieser kann etwa ein Navigations- und Audiosystem oder auch eine elektronische Steuerung von Fahrzeugfunktionen sein. Der elektrische Verbraucher stellt somit eine Wärmequelle 2 dar, die im Bereich des Fahrgastraumes angeordnet ist. Im Allgemeinen wird durch die Wärmequelle 2 somit nicht nur Wärme erzeugt, sondern es finden aufgrund der elektronischen Bauteile auch Ausdünstungen von Schadstoffen und/oder unangenehmen Geruchsstoffen statt.

Von der Wärmequelle 2 führt eine Saugleitung 3 zu einem Klimagerät 4, welches ebenfalls unterhalb des Armaturenbretts 1 angeordnet ist. Das Klimagerät 4 ist Bestandteil einer Klimaanlage des Fahrzeugs, die über eine elektronische Steuereinheit verfügt (nicht dargestellt). In dieser Steuereinheit kann neben den üblicherweise vorliegenden Parametern Außentemperatur, Fahrgastraumtemperatur etc. auch eine Leistung der Wärmequelle oder auch eine unmittelbar gemessene Temperatur der Wärmequelle eingelesen sein.

Die Wärmequelle 2 weist vorliegend ein sie im bis auf Lüftungslöcher gekapselt umschließendes Gehäuse 2a auf, welches somit einen Strömungskanal für die durch die Saugleitung 3 angesaugte Kühlluft darstellt. In altemativer Abweichung hiervon könnte auch der gesamte Raumbereich unter dem Armaturenbrett 1, welcher in Fahrtrichtung und nach unten von Trennwänden 5 umschlossen ist, als Strömungskanal fungieren, wobei gegebenenfalls eine erhöhte Saugleistung zur Verfügung zu stellen wäre.

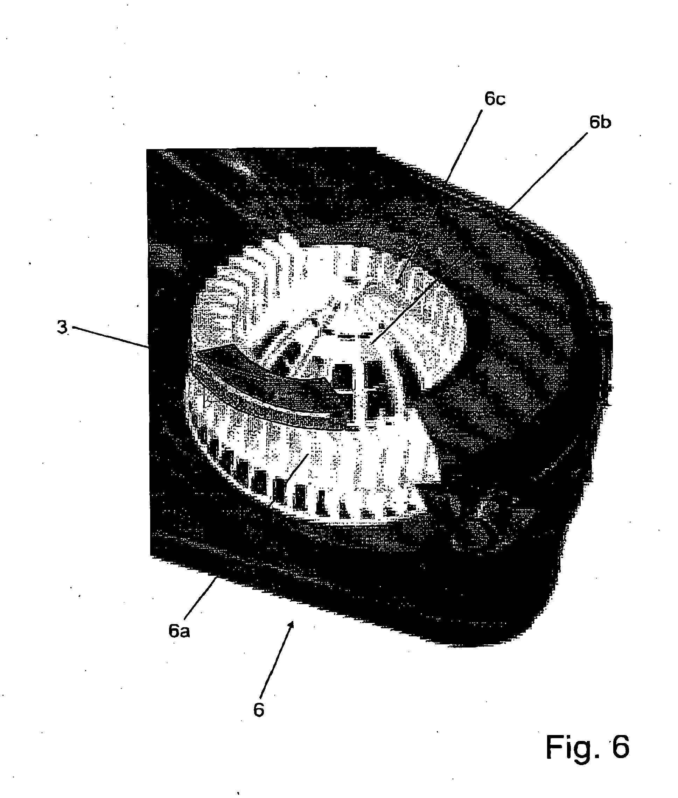

Das Absaugen der die Wärmequelle 2 umströmenden Luft, das heißt die Bereitstellung eines gegenüber dem Fahrgastraum verminderten Drucks in der Saugleitung, erfolgt mittels eines Gebläses 6 (siehe Fig. 2) des Klimageräts 4. Dieses Gebläse 4 ist ein Hauptgebläse des Klimagerätes 4 und als Radiallüfter ausgebildet. Die Saugleitung 3 ist im Zuge einer einfachen Modifikation eines an sich bekannten Klimaanlagengebläses an dem Gehäuse des Gebläses 6 angebracht. Wie die Schnittzeichnung Fig. 3 und auch die Darstellung gemäß Fig. 6 zeigen, mündet die Saugleitung so im Gehäuse des Gebläses 6, daß Gebläseschaufeln 6a eines Gebläserotors 6b an der Einmündung 3a der Saugleitung 3 vorbeistreichen. Hierdurch wird Luft aus der Saugleitung 3 in das Gebläse 6 gerissen, so daß in der Saugleitung ein Unterdruck entsteht.

In der Ausführung gemäß Fig. 2 ist die Saugleitung 3 im Bereich einer Stimebene des Rotors 6b in der Nähe eines zentralen Hauptluftzutritts 6c angeordnet.

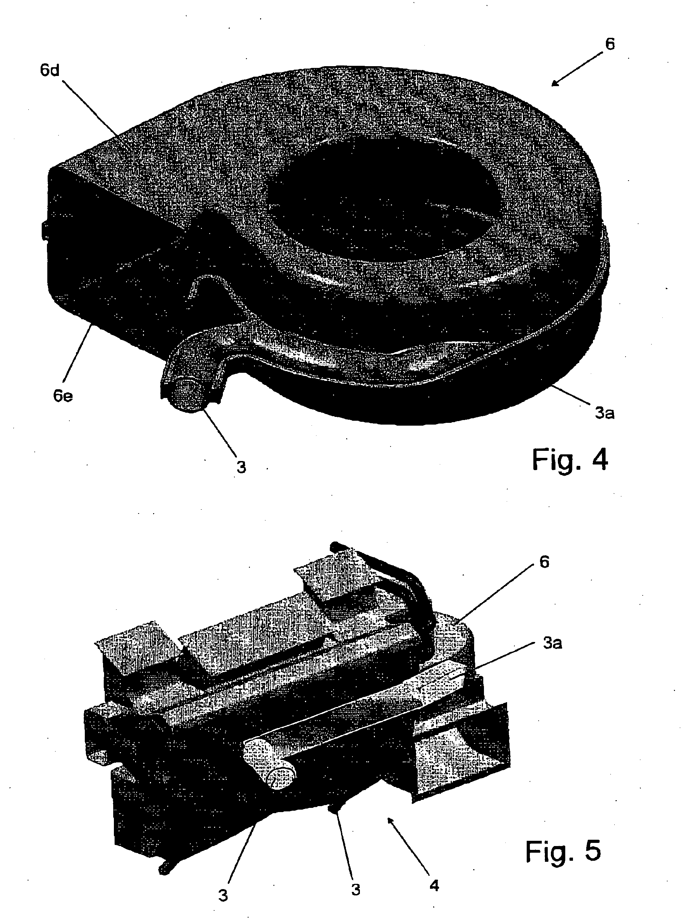

In einer Abwandlung hiervon (siehe Fig. 4) kann die Mündung 3a der Saugleitung 3 auch in einer zur Rotorachse senkrechten Symmetrieebene des Gebläsegehäuses angeordnet sein. In dieser Symmetrieebene ist das Gehäuse aus zwei Gehäusehälften 6d, 6e zusammengefügt. Die Einmündung der Saugleitung 3 in das Gehäuse 6d, 6e ist so angeordnet, daß die radialen Außenenden der Gebläseschaufeln 6a an der Mündung vorbeistreichen. Hier liegt auch die größte Bahngeschwindigkeit von Bestandteilen des Rotors 6b vor, so daß eine Evakuierung der Saugleitung 3 besonders effektiv ist.

Wie in Fig. 5 gezeigt kann die Saugleitung ausgehend von dem Gebläse 6 in ihrem weiteren Verlauf zunächst in das Klimagerät 4 integriert oder an diesem befestigt sein.

Nachdem die Luft von der Wärmequelle 2 mittels der Saugleitung 3 und dem Gebläse 6 in das Klimagerät abgesaugt wurde, durchläuft sie eine oder mehrere Schritte der Konditionierung. Dies sind die gleichen Schritte, wie sie ganz allgemein von der letztlich für den Fahrgastraum bestimmten, von dem Gebläse 6 angesaugten Luft durchlaufen werden. Hierzu gehört insbesondere eine Geruchsfilterung, zum Beispiel durch Aktivkohlefilter. Auch eine Kühlung an einem Verdampfer kann dem Abscheiden von Schad-und Geruchsstoffen dienen.

Die zuvor genannte elektronische Steuereinheit der Klimaanlage ist zugleich eine Kontrollvorrichtung zur Kontrolle der Temperatur der Wärmequelle. Bei der zuvor beschriebenen kostengünstigen Modifikation einer an sich bekannten Klimaanlage kann es sein, daß in bestimmten Betriebsmodi das Gebläse 6 nicht läuft und zugleich eine hohe Leistung an der Wärmequelle 2 anliegt. Es ist dann zum Schutz der Wärmequelle 2 notwendig, eine Lüftung bzw. Kühlung zu starten. Dies kann ein erzwungenes Anlaufen des Hauptgebläses 6 sein. Beispielsweise kann eine Steuervorrichtung vorgesehen sein die bei Erreichen eines Schwellwerts, beispielsweise einer Temperatur, die an oder im Bereich der Wärmequelle gemessen wird bei ausgeschaltetem Gebläse ein Anlaufen des Gebläses oder bei laufendem Gebläse eine Erhöhung der Förderleistung des Gebläses, beispielsweise durch Umschalten auf eine höhere Gebläsestufe, bewirkt. Es kann sich jedoch auch um einen Start eines (nicht dargestellten) Zusatzgebläses handeln. Dieses Zusatzgebläse kann ebenfalls in die Saugleitung 3 integriert sein. Es kann jedoch auch so angeordnet sein, daß die Kühlluft letztlich unmittelbar in den Passagierraum abgegeben wird, da es sich lediglich um einen seltenen Notbetrieb handelt. Das Zusatzgebläse kann auch so ausgelegt sein, daß es das Hauptgebläse 6 unter extremen Temperatur- und Leistungsbedingungen unterstützt. Es kann alternativ vorgesehen sein, daß Zusatzgebläse und Kontrollvorrichtung eine autonome Einheit bilden, die von Hauptgebläse und Klimaanlagensteuerung unabhängig funktioniert. Derartige mit Temperaturwächter versehene Kleinlüfter sind als separate Einheiten zu niedrigen Kosten erhältlich und geeignet, die seltenen Fälle abzusichern, in denen das Hauptgebläse trotz hoher Temperaturen nicht in Betrieb ist.

## Patentansprüche

1. Vorrichtung zur Kühlung einer Wärmequelle (2) eines Kraftfahrzeugs, wobei die Wärmequelle (2) zumindest einen, insbesondere in einem Fahrgastbereich des Fahrzeugs angeordneten, elektrischen Verbraucher aufweist, umfassend einen Strömungskanal (2a), durch welchen Luft bewegbar und mit der Wärmequelle (2) in thermischen Kontakt bringbar ist, wobei die Luft mittels eines bezüglich der Wärmequelle (2) stromabwärts angeordneten Gebläses (6) absaugbar und eine separat ausgebildete Saugleitung (3) zum Absaugen der Luft von der Wärmequelle (2) mit dem Gebläse (6) verbunden ist, wobei
eine Einmündung der Saugleitung (3) zum Absaugen der Luft von der Wärmequelle (2) in einem Bereich des Gebläses (6) mit einem geringen statischem Druck angeordnet ist, **dadurch gekennzeichnet, dass** die Einmündung der Saugleitung (3) zum Absaugen der Luft im Bereich einer Stirnebene des Rotors (6b) des Gebläses (6), benachbart zu einem zentralen Hauptluftzutritt (6c) des Gebläses (6) und/oder in einem Umfangsbereich des Gehäuses des Gebläses (6) angeordnet ist, so dass die Gebläseschaufeln (6a) des Gebläserotors (6b) an der Einmündung (3a) der Saugleitung (3) vorbeistreichen.

2. Vorrichtung nach Anspruch 1, **dadurch gekennzeichnet, dass** eine Einmündung der Saugleitung (3) in einem Teilungsbereich des Gehäuses des Gebläses (6) angeordnet ist.

3. Vorrichtung nach einem der vorhergehenden Ansprüche, **dadurch gekennzeichnet, daß** die Wärmequelle (2) im Bereich eines Armaturenbretts (1) des Kraftfahrzeugs angeordnet ist.

4. Vorrichtung nach einem der vorhergehenden Ansprüche, **dadurch gekennzeichnet, daß** die abgesaugte Luft einer Klimaanlage (4) des Kraftfahrzeugs zuführbar ist.

5. Vorrichtung nach Anspruch 4, **dadurch gekennzeichnet, daß** die Luft nach ihrer Zuführung zu der Klimaanlage (4) eine Konditionierung, insbesondere eine Kühlung und/oder eine Filterung, durchläuft.

6. Vorrichtung nach Anspruch 4 oder 5, **dadurch gekennzeichnet, daß** das Gebläse (6) ein Hauptgebläse der Klimaanlage (4) ist.

7. Vorrichtung nach einem der vorhergehenden Ansprüche, **dadurch gekennzeichnet, daß** ein Zusatzgebläse zur Beförderung der Luft vorgesehen ist.

8. Vorrichtung nach einem der vorhergehenden Ansprüche, **dadurch gekennzeichnet, daß** die Luft zur Kühlung der Wärmequelle (2) zumindest teilweise aus dem Fahrgastbereich stammt.

9. Vorrichtung nach einem der vorhergehenden Ansprüche, **dadurch gekennzeichnet, daß** eine Kontrollvorrichtung zur Kontrolle der Temperatur der Wärmequelle (2) vorgesehen ist, mittels derer das Gebläse (6) ansteuerbar ist.

10. Kraftfahrzeug-Klimaanlage mit einer Vorrichtung nach einem der vorhergehenden Ansprüche, **dadurch gekennzeichnet, dass** die Klimaanlage zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

1. Device for cooling a heat source (2) of a motor vehicle, the heat source (2) comprising at least one electricity consumer, in particular one arranged in a passenger area of the motor vehicle, the said device comprising a flow duct (2a) through which air can be passed and brought into thermal contact with the heat source (2), such that the air can be drawn in by a fan (6) positioned downstream from the heat source (2) and a separate suction line (3) for drawing the air away from the heat source (2) is connected to the fan (6), the said suction line (3) for drawing off air from the heat source (2) having an inlet in an area of the fan (6) where the static pressure is low, **characterised in that** the inlet of the suction line (3) for drawing off air is arranged in the area of a front plane of the rotor (6b) of the fan (6) close to a central main air inlet (6c) of the fan (6) and/or in a peripheral area of the housing of the fan (6), so that the fan-blades (6a) of the fan rotor (6b) sweep past the inlet (3a) of the suction line (3).

2. Device according to Claim 1, **characterised in that** an inlet of the suction line (3) is arranged in a divided area of the housing of the fan (6).

3. Device according to either of the preceding claims, **characterised in that** the heat source (2) is arranged in the area of an instrument panel (1) of the motor vehicle.

4. Device according to any of the preceding claims, **characterised in that** the air drawn off can be passed into an air-conditioning unit (4) of the motor vehicle.

5. Device according to Claim 4, **characterised in that** after being passed into the air-conditioning unit (4), the air is conditioned, in particular by cooling and/or filtration.

6. Device according to Claims 4 or 5, **characterised in that** the fan (6) is a main fan of the air-conditioning unit (4).

7. Device according to any of the preceding claims, **characterised in that** an additional fan is provided for delivering air.

8. Device according to any of the preceding claims, **characterised in that** the air for cooling the heat source (2) is taken at least in part from the passenger area.

9. Device according to any of the preceding claims, **characterised in that** a control device is provided for controlling the temperature of the heat source (2), by means of which the fan can be controlled.

10. Motor vehicle air-conditioning unit with a device according to any of the preceding claims, **characterised in that** the air-conditioning unit comprises at least one of the following components: heat exchanger, heating elements, evaporator, filter, temperature-mixer valve, mixing chamber, one or more flow ducts, and one or more control valves for distributing the air between the outlet ducts.

## Revendications

1. Dispositif pour le refroidissement d'une source de chaleur (2) d'un véhicule automobile, où la source de chaleur (2) présente au moins un récepteur électrique disposé en particulier dans une zone de l'habitacle du véhicule, source de chaleur comprenant un conduit d'écoulement (2a) à travers lequel de l'air peut être déplacé et mis en contact thermique avec la source de chaleur (2), où l'air peut être aspiré au moyen d'une soufflante (6) disposée en aval de la source de chaleur (2), et une conduite d'aspiration (3) configurée de façon distincte et servant à aspirer l'air provenant de la source de chaleur (2) est raccordée à la soufflante (6), où une arrivée de la conduite d'aspiration (3) servant à aspirer l'air provenant de la source de chaleur (2) est disposée dans une zone de la soufflante (6) à faible pression statique,
**caractérisé en ce que** l'arrivée de la conduite d'aspiration (3) servant à aspirer l'air est disposée, dans la zone d'un plan frontal du rotor (6b) de la soufflante (6), en étant voisine d'une entrée d'air principale centrale (6c) de la soufflante (6) et / ou dans une zone périphérique du carter de la soufflante (6), de sorte que les pales de soufflante (6a) du rotor de soufflante (6b) passent devant l'arrivée (3a) de la conduite d'aspiration (3).

2. Dispositif selon la revendication 1, **caractérisé en ce qu'**une arrivée de la conduite d'aspiration (3) est disposée dans une zone de séparation du carter de la soufflante (6).

3. Dispositif selon l'une ou l'autre des revendications précédentes, **caractérisé en ce que** la source de chaleur (2) est disposée dans la zone d'un tableau de bord (1) du véhicule automobile.

4. Dispositif selon l'une quelconque des revendications précédentes, **caractérisé en ce que** l'air aspiré peut être fourni à un système de climatisation (4) du véhicule automobile.

5. Dispositif selon la revendication 4, **caractérisé en ce que** l'air, après avoir été fourni au système de climatisation (4), subit un conditionnement, en particulier un refroidissement et / ou une filtration.

6. Dispositif selon la revendication 4 ou 5, **caractérisé en ce que** la soufflante (6) est une soufflante principale du système de climatisation (4).

7. Dispositif selon l'une quelconque des revendications précédentes, **caractérisé en ce qu'**il est prévu une soufflante supplémentaire pour le transport de l'air.

8. Dispositif selon l'une quelconque des revendications précédentes, **caractérisé en ce que** l'air servant au refroidissement de la source de chaleur (2) provient au moins partiellement de la zone de l'habitacle.

9. Dispositif selon l'une quelconque des revendications précédentes, **caractérisé en ce qu'**il est prévu un dispositif de contrôle servant au contrôle de la température de la source de chaleur (2), dispositif de contrôle au moyen duquel la soufflante (6) peut être commandée.

10. Système de climatisation d'un véhicule automobile comprenant un dispositif selon l'une quelconque des revendications précédentes, **caractérisé en ce que** le système de climatisation comprend au moins l'un des composants suivants : un échangeur de chaleur, un radiateur, un évaporateur, un filtre, un volet mélangeur de température, une chambre de mélange, un ou plusieurs conduits d'écoulement et un ou plusieurs volets de commande servant à la répartition de l'air aux conduits de sortie.
